# EUROPÄISCHE PATENTANMELDUNG

(11) **EP 1 291 258 A1**
(43) Veröffentlichungstag der Anmeldung: **12.03.2003**
(21) Anmeldenummer: 02016830.8
(22) Anmeldetag: 29.07.2002
(51) Int. Cl.: B60T 13/58, B60T 10/00, B60T 7/04

(54) **Bremsvorrichtung für Fahrzeuge, die eine Betriebsbremsanlage und eine Dauerbremsanlage aufweisen**

(30) Priorität: 10.09.2001 DE 10144302
(71) Anmelder: KNORR-BREMSE Systeme für Nutzfahrzeuge GmbH, 80809 München (DE)
(72) Erfinder: Seiche, Andreas, 70839 Gerlingen (DE)

(57) **Zusammenfassung**

Die Betriebsbremsanlage (BBA) und die Dauerbremsanlage (DBA1,DBA2) eines Fahrzeuges werden in Abhängigkeit vom aktuellen Fahrzustand (5) des Fahrzeuges angesteuert und zwar gemeinsam über das Bremspedal (1), wobei die Bremskraftaufteilung automatisch gesteuert erfolgt. Bei Bremsungen, bei denen die Bremskraft der Dauerbremsen (DBA1,DBA2) ausreicht, kommen primär bzw. ausschließlich die Dauerbremsen (DBA1,DBA2) zum Einsatz und nur bei stärkeren Bremsungen kommen die Dauerbremsanlage (DBA1,DBA2) und die Betriebsbremsanlage (BBA) gemeinsam zum Einsatz. Mit der automatischen Steuerung kann bei einer Auswertung des Fahrzustandes (5) auch gezielt die Aufteilung der Bremskräfte auf das Zugfahrzeug und das Anhängerfahrzeug bzw. den Auflieger verändert werden sowie die Bremskraftaufteilung zwischen einzelnen Zugfahrzeugachsen und zwischen Dauerbremsen und der Betriebsbremse. Durch eine derartige gezielte Beeinflußung der Bremskraftaufteilung kann die Fahrstabilität verbessert werden. Ferner kann damit gezielt auf "Fahrzeugfunktionen" zwischen dem Zugfahrzeug und dem Anhängerfahrzeug bzw. dem Auflieger Einfluß genommen werden, wie z.B. auf eine Koppelkraftregelung bzw. auf eine Bremsbelagverschleißregelung.

## Beschreibung

Die vorliegende Erfindung betrifft eine Bremsvorrichtung für Fahrzeuge gemäß dem Oberbegriff des Patentanspruches 1.

Nutzfahrzeuge sind üblicherweise mit einer oder mehreren verschiedenen Dauerbremsen ausgestattet, wie sie beispielsweise in "Kraftfahrtechnisches Taschenbuch/Bosch", 22. Auflage, Düsseldorf: VDI-Verlag, 1995, S. 648 ff, beschrieben sind. Dauerbremsen arbeiten im Gegensatz zu den Betriebsbremsen verschleißfrei bzw. annähernd verschleißfrei. Am häufigsten kommen in Nutzfahrzeugen Motorbremsen, Motorbremsen mit Auspuffklappe sowie Retarder zum Einsatz. Diese Dauerbremsen sind separat zur Betriebsbremse manuell vom Fahrer aktivierbar. Ein effektiver Einsatz von Dauerbremsen hat verschiedene Vorteile, insbesondere die Einsparung von Bremsbelägen der Betriebsbremse und Vermeidung von Fading der Betriebsbremse. Außerdem können mit verschleißfreien Dauerbremsen bergab höhere Geschwindigkeiten gefahren werden.

Aufgabe der Erfindung ist es, den Einsatz von Dauerbremsen weiter zu optimieren.

Der Erfindung liegt die Idee zugrunde, die Betriebsbremsanlage und die Dauerbremsanlage eines Fahrzeuges in Abhängigkeit vom aktuellen Fahrzustand des Fahrzeuges anzusteuern und zwar gemeinsam bzw. zentral über das Bremspedal, wobei die Bremskraftaufteilung automatisch gesteuert ist. Um den Vorteil der Verschleißfreiheit von Dauerbremsen optimal ausnutzen zu können, ist vorgesehen, daß bei Bremsungen, bei denen die vom jeweiligen Fahrzustand abhängige Bremskraft der Dauerbremsen ausreicht, primär bzw. ausschließlich die Dauerbremsen zum Einsatz kommen und nur bei stärkeren Bremsungen die Dauerbremsanlage und die Betriebsbremsanlage gemeinsam zum Einsatz kommt.

Mit anderen Worten, wenn die vom Fahrer über das Bremspedal angeforderte Soll-Bremskraft kleiner als die im jeweiligen Fahrzustand von der Dauerbremsanlage maximal aufbringbare Dauerbremskraft ist, wird grundsätzlich nur die Dauerbremsanlage betätigt. Wenn hingegen die angeforderte Soll-Bremskraft größer als die maximal mögliche Dauerbremskraft ist, wird die Soll-Bremskraft in Abhängigkeit vom aktuellen Fahrzustand auf die Betriebsbremsanlage und die Dauerbremsanlage aufgeteilt.

Mit der automatischen Steuerung kann bei einer Auswertung des Fahrzustandes auch gezielt die Aufteilung der Bremskräfte auf das Zugfahrzeug und das Anhängerfahrzeug bzw. den Auflieger verändert werden sowie die Bremskraftaufteilung zwischen einzelnen Zugfahrzeugachsen und zwischen Dauerbremsen und der Betriebsbremse. Durch eine derartige gezielte Beeinflussung der Bremskraftaufteilung kann die Fahrstabilität verbessert werden. Ferner kann damit gezielt auf "Fahrzeugfunktionen" zwischen dem Zugfahrzeug und dem Anhängerfahrzeug bzw. dem Auflieger Einfluss genommen werden, wie z.B. auf eine Koppelkraftregelung bzw. auf eine Bremsbelagverschleißregelung.

Durch eine von der jeweiligen Fahrsituation abhängige automatische elektronische Bremskraftaufteilung kann die thermische und mechanische Belastung der Betriebsbremsanlage minimiert werden, was zu einem geringeren Bremsbelagverschleiß führt und längere Wartungsintervalle ermöglicht. Außerdem verringert sich dadurch die Gefahr einer Überhitzung der Betriebsbremsen (Fading-Gefahr) und beim Bergabfahren werden höhere Geschwindigkeiten ermöglicht. Des weiteren kann mit der "automatischen elektronischen Bremskraftaufteilung" die Fahrstabilität optimiert und die Wirksamkeit anderer Fahrzeugfunktionen gewährleistet werden. Da die Betätigung der Dauerbremsen und die Bremskraftaufteilung automatisch bei Betätigung des Bremspedals erfolgt, wird der Fahrer entlastet. Er hat nämlich nur noch ein gemeinsames "Betätigungsorgan" zu bedienen.

Nach einer Weiterbildung ist zur Verbesserung des "Bremskomforts" vorgesehen, dass das konstruktiv bedingte dynamische Verhalten der im Fahrzeug vorhandenen Dauerbremse(n), z.B. ein verzögerter Bremskraftaufbau, durch eine kurzzeitige Überlagerung der Betriebsbremse kompensiert wird und zwar auch dann, wenn die Soll-Bremskraft kleiner als die mögliche Dauerbremskraft ist. Wenn die Soll-Bremskraft größer ist als die maximal mögliche Dauerbremskraft, d.h. wenn die "statisch" erwartete Bremskraft von der Dauerbremse nicht erreicht wird, ist ohnehin eine automatische Unterstützung durch die Betriebsbremse vorgesehen. Die fehlende Bremskraft der Dauerbremse wird dabei durch die zusätzliche Bremskraft der Betriebsbremse ersetzt.

Durch die gemeinsame automatisch aufeinander abgestimmte Ansteuerung der Betriebsbremsanlage und der Dauerbremsanlage werden u.a. folgende Vorteile erreicht:
- Die Soll-Vorgabe des Fahrers kann unabhängig von den konstruktiv bedingten Eigenschaften der Dauerbremsen, wie z.B. geringe Stufbarkeit, dynamisches Verhalten, Leistungsabhängigkeit vom jeweiligen Fahrzustand etc., erfüllt werden und zwar ohne dass die Eigenschaften der Dauerbremsen die Bremscharakteristik des Bremspedals beeinflussen;
- Minimierung des Bremsbelagverschleißes der Betriebsbremse durch häufigen, automatisch gesteuerten Einsatz der Dauerbremsen;
- Ermöglichung einer Bremsbelagverschleißregelung mit dem Ziel, an allen Achsen einen gleichmäßigen Verschleiß zu erreichen, durch geeignete Ansteuerung der Betriebsbremse bei geringen Abbremsungen;
- Ermöglichung einer Koppelkraftregelung zwischen Zugfahrzeug und Anhängerfahrzeug bzw. Auflieger durch entsprechende Aufteilung der Bremskräfte auf das Zugfahrzeug und das Anhängerfahrzeug bzw. den Auflieger;
- Optimierung der Kraftschlussausnutzung durch entsprechende Verteilung der Bremskräfte der Bremsen auf die Zugfahrzeugachsen, z.B. bei höheren Abbremsungen, geringerer Beladung oder schlechtem Straßenzustand;
- Optimierung und Überwachung der gemeinsamen Ansteuerung der Betriebsbremse und der Dauerbremsen, der Bremsbelagverschleißregelung, der Koppelkraftregelung zwischen Zugfahrzeug und Anhängerfahrzeug bzw. Auflieger sowie der Kraftschlussausnutzung durch Auswertung der Signale von Raddrehzahlsensoren und Bremsbelagverschleißsensoren sowie der daraus ableitbaren Größen;
- keine zusätzlichen Anforderungen an den Fahrer, sondern Entlastung des Fahrers durch automatischen Einsatz der Dauerbremsen;
- Verringerung der Fading-Gefahr der Betriebsbremsen durch häufigen Einsatz der Dauerbremsen und entsprechende Verteilung der Bremsleistung auf die verschiedenen Achsen.

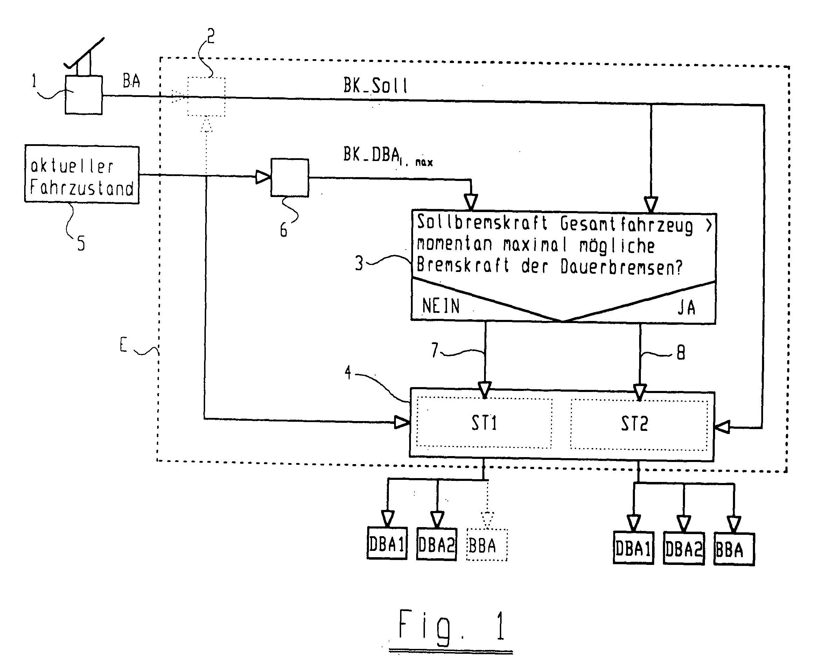

Im folgenden wird die Erfindung anhand eines Ausführungsbeispieles im Zusammenhang mit der Zeichnung näher erläutert. Die einzige Figur 1 zeigt schematisch das Prinzip gemäß der Erfindung.

Über ein Bremspedal 1 gibt der Fahrer ein Bremsanforderungssignal BA vor. Das Bremsanforderungssignal BA kann entweder ein von der Stellung des Bremspedals abhängiger Bremsdruck oder eine von der Pedalstellung abhängige Verzögerung sein.

Wenn der Fahrer über die Stellung des Bremspedals eine bestimmte Verzögerung vorgibt, so muss das Bremsanforderungssignal BA in Abhängigkeit vom jeweiligen Fahrzustand, insbesondere der Masse des Fahrzeuges und des ggf. vorhandenen Anhängers, der Fahrbahnneigung etc. durch eine Modifizierungseinrichtung 2 in ein entsprechendes Verzögerungssignal bzw. eine entsprechende Bremskraft BK_Soll umgewandelt werden. Die Soll-Bremskraft BK_Soll wird einem Vergleicher 3 und einer Steuereinrichtung 4 zugeführt.

Der aktuelle Fahrzustand des Fahrzeuges, der hier vereinfacht durch einen Kasten 5 dargestellt ist, ist eine komplizierte Vektorgröße, die durch eine Vielzahl von Variablen näherungsweise abbildbar ist, wie z.B. Fahrzeuggeschwindigkeit, Raddrehzahlen, Radschlüpfe, Fahrzeugmasse, Lenkwinkel, Fahrbahnneigung, momentane Getriebeübersetzung, Kühlsystemtemperatur, Batterieladezustand etc.

In Abhängigkeit vom aktuellen Fahrzustand 5 ermittelt eine Überwachungseinrichtung 6 für die im Fahrzeug vorhandene(n) Dauerbremse(n) die momentan mögliche Dauerbremskraft der einzelnen Dauerbremsen BK DBA_{i, max} bzw. die momentan mögliche Gesamtdauerbremskraft. Im Vergleicher 3 wird dann die mit der bzw. den Dauerbremsen momentan maximal erreichbare Dauerbremskraft mit der Soll-Bremskraft BK_Soll verglichen. Es wird also überprüft, ob eine alleinige Ansteuerung der Dauerbremsen ausreicht.

Wenn die Soll-Bremskraft kleiner als die momentan mögliche Dauerbremskraft ist, d.h. wenn eine alleinige Ansteuerung der Dauerbremsen ausreicht, wird der Steuereinrichtung 4 ein Signal 7 zugeführt.

Die Steuereinrichtung 4 ist hier rein schematisch in zwei Blöcke ST1 und ST2 unterteilt. Der Block ST1 übernimmt die Regelung, wenn die Soll-Bremskraft kleiner als die momentan mögliche Dauerbremskraft ist. Der Block ST2 übernimmt die Regelung, wenn zusätzlich die Betriebsbremsanlage zum Einsatz kommt.

Die Modifizierungseinrichtung 2, der Vergleicher 3, die Steuereinrichtung 4 und die Überwachungseinrichtung 6 sind Komponenten einer Regelelektronik E.

In Abhängigkeit von dem aktuellen Fahrzustand 5 steuert die Steuereinrichtung 4 Dauerbremsen DBA1, DBA2 entsprechend dem Soll-Bremssignal BK_Soll an. Die Aufteilung auf die einzelnen Dauerbremsen DBA1, DBA2 kann unter Berücksichtigung einer Vielzahl konstruktiv vorgegebener Randbedingungen, wie z.B. der Stufbarkeit und der dynamischen Eigenschaften der einzelnen Dauerbremsen, erfolgen.

Ein weiteres wesentliches Kriterium für die Bremskraftaufteilung ist die Leistungsfähigkeit der einzelnen Dauerbremsen in Abhängigkeit vom jeweiligen Fahrzustand, d.h. insbesondere von der Motordrehzahl, der Fahrzeuggeschwindigkeit oder vom Kupplungszustand bzw. dem eingelegten Getriebegang.

Ferner können aktuelle Zustände anderer Fahrzeugsysteme bei der Regelung der Bremskraftaufteilung berücksichtigt werden, mit denen die Dauerbremsen in Wechselwirkung stehen, wie z.B. die Temperatur des Kühlsystems oder der Ladezustand der Batterie. Hydrodynamische Retarder beispielsweise wandeln nämlich die Bremsenergie in Wärme um. Sofern sie zur Wärmeabfuhr an das Fahrzeugkühlsystem angeschlossen sind, ist es sinnvoll, bei der Betätigung bzw. der Bremskraftaufteilung auf solche Dauerbremsen die momentane Kühlsystemtemperatur zu berücksichtigen, um eine Überhitzung zu vermeiden.

Des weiteren können bei der Regelung Umweltaspekte berücksichtigt werden. Die Bremskraftaufteilung kann unter dem Gesichtspunkt der Geräuschentwicklung bzw. der Lärmbelästigung geregelt werden. Eine geräuschintensive Motorbremse kann beispielsweise primär bei höheren Geschwindigkeiten, die außerorts erreicht werden, eingesetzt werden. Ferner kann vorgesehen sein, dass die Motorbremse erst dann eingesetzt wird, wenn der Retarder seine maximale Bremsleistung erreicht hat. Eine Motorbremse kann bei hohem Anforderungsgradient und niedriger Fahrzeuggeschwindigkeit einen schnellen Bremskraftaufbau leisten, ist aber hinsichtlich der Geräuschentwicklung eher für einen Einsatz außerorts bzw. auf Autobahnen geeignet. Ein Retarder hingegen ermöglicht eine gute Stufbarkeit und ausreichend Bremskraft bei höheren Fahrzeuggeschwindigkeiten.

In dem oben beschriebenen Fall, dass die Soll-Bremskraft kleiner ist als die mögliche Dauerbremskraft, kommt die Betriebsbremsanlage BBA nur unterstützend zum Einsatz, was in Fig. 1 durch die gestrichelte Darstellung angedeutet ist. Die Betriebsbremsanlage BBA kommt in diesem Fall, wenn überhaupt, nur kurzzeitig zum Einsatz, um das konstruktiv bedingte dynamische Verhalten der Dauerbremsen DBA1, DBA2 beim Bremskraftaufbau bzw. Bremskraftabbau zu kompensieren, d.h. ein gewünschten "gleichmäßigen" Verzögerungsverlauf zu erreichen.

Falls die Soll-Bremskraft hingegen größer ist als die maximal mögliche Dauerbremskraft, d.h. wenn die maximal mögliche Ansteuerung der Dauerbremsen nicht ausreicht, wird der Steuereinrichtung ein Steuersignal 8 zugeführt. Die "fehlende Bremskraft" wird dann durch die Betriebsbremsanlage BBA des Fahrzeugs bzw. des Motorfahrzeugs und des Anhängerfahrzeugs/Aufliegers übernommen, wobei zusätzlich die Dauerbremsen betätigt werden. Dabei sollen die Abbremsungen des Motorfahrzeugs und des Anhängers/Aufliegers aufgrund der jeweiligen Betriebsbremse gleich sein. Aus dieser Bedingung und den Massen des Motorfahrzeugs und des Anhängers/Aufliegers lässt sich die Bremskraft für das Motorfahrzeug bestimmen.

Dabei kann die Betriebsbremse des Motorfahrzeugs nach folgenden Kriterien gesteuert werden:
- Bei insgesamt geringen Bremskräften kann der Bremsbelagverschleiß optimiert werden. Entsprechend einer Bremsbelagverschleißregelung können die Bremsdrücke an den Motorfahrzeugachsen bestimmt werden. Die Bremskraftaufteilung auf die einzelnen Achsen kann beispielsweise auf einen möglichst gleichmäßigen Verschleiß an allen Achsen ausgerichtet sein.
- Bei insgesamt höheren Bremskräften können die Bremsdrücke entsprechend einer gleichen Kraftschlussausnutzung an den Achsen geregelt werden. Dabei können die von Raddrehzahlsensoren gelieferten Signale sowie daraus abgeleitete Größen, wie z.B. Beschleunigung und Schlupf, berücksichtigt werden.

Bei der Ansteuerung des Anhängers/Aufliegers steuert das Motorfahrzeug den Kupplungskopfdruck entsprechend einem zulässigen Verhältnis zwischen der Abbremsung der Betriebsbremse des Motorfahrzeugs und dem Kupplungskopfdruck. Der Anhänger/Auflieger erfüllt ebenfalls das zulässige Verhältnis mit seiner Betriebsbremse. Gegebenenfalls kann der Kupplungskopfdruck entsprechend einer Koppelkraftregelung gesteuert werden.

Bei der Ansteuerung der Bremsen, d.h. bei der Bremskraftaufteilung können insbesondere die von Raddrehzahlsensoren gelieferten Raddrehzahlsignale sowie daraus abgeleitete Größen, wie z.B. Radschlupf und Achsschlupf berücksichtigt werden. Diese Größen beeinflussen dann die Aufteilung der Bremskräfte auf das Motorfahrzeug und den Anhänger/Auflieger, auf die einzelnen Motorfahrzeug-Achsen und die Aufteilung der Bremskräfte auf die Dauerbremsen und die Betriebsbremsen.
Es kann vorgesehen sein, dass an der Achse bzw. den Achsen, auf die die Dauerbremsen wirken, ein höherer maximaler Schlupf zugelassen wird als an anderen Achsen. Dadurch wird insbesondere bei geringem Bremskraftniveau eine effektive Nutzung der Dauerbremsen und der Einsatz der Bremsbelagverschleißregelung ermöglicht. Falls alle Achsen im gleichen Schlupf gehalten werden, kann beispielsweise bei hohem Bremskraftniveau die Kraftschlussausnutzung optimiert und die Stabilität erhöht werden. Die Regelung der Achsschlüpfe wird erreicht, indem die Aufteilung der Bremskräfte auf die Achsen entsprechend adaptiert wird.

Die gemessene Ist-Abbremsung kann zur Regelung der Bremskräfte verwendet werden. Als Soll-Vorgabe können bei der Abbremsung der Einfluss der Straßenneigung, der Motorschleppwirkung sowie eventuell weitere Einflüsse berücksichtigt werden. Diese kompensierte Abbremsung kann ebenfalls als Soll-Vorgabe verwendet werden.

Auch falls die Soll-Bremskräfte für das Gesamtfahrzeug, Motorfahrzeug und den Anhänger/Auflieger auf andere Weise bestimmt werden, kann die Ansteuerung der Bremsen - wie oben beschrieben - verwendet werden.

## Patentansprüche

1. Bremsvorrichtung für Fahrzeuge, insbesondere durch ein Zugfahrzeug und ein Anhängerfahrzeug gebildete Fahrzeugverbände, die eine Betriebsbremsanlage und eine Dauerbremsanlage mit mindestens einer Dauerbremse aufweisen, wobei ein Geber zum Vorgeben einer Soll-Bremskraft durch den Fahrer vorgesehen ist und eine mit dem Geber verbundene elektronische Steuereinrichtung zur Ansteuerung der Betriebsbremsanlage, **dadurch gekennzeichnet,**
- **dass** eine Überwachungseinrichtung (6) vorgesehen ist zum Ermitteln der maximal möglichen Dauerbremskraft, die in Abhängigkeit vom aktuellen Fahrzustand (5) durch die mindestens eine Dauerbremse (DBA1, DBA2) erzeugbar ist,
- **dass** ein Vergleicher (3) vorgesehen ist, der mit dem Geber (1) und der Überwachungseinrichtung (6) verbunden ist, zum Vergleichen der Soll-Bremskraft (BK_Soll) mit der maximalen Dauerbremskraft (BK_DBA_{i,} ₘₐₓ), und
- **dass** die Steuereinrichtung (4) mit dem Vergleicher (3) verbunden ist, zur gemeinsamen Ansteuerung der Betriebsbremsanlage (BBA) und der Dauerbremsanlage (DBA1, DBA2), wobei die Steuereinrichtung (4),
- wenn die Soll-Bremskraft (BK_Soll) kleiner als die maximal mögliche Dauerbremskraft (BK_DBA_{i, max}) ist, die mindestens eine Dauerbremse (DBA1, DBA2) betätigt, und
- wenn die Soll-Bremskraft (BK_Soll) größer als die maximal mögliche Dauerbremskraft (BK_DBA_{i,} ₘₐₓ) ist, die Soll-Bremskraft (BK_Soll) gemäß einer vorgegebenen Regelvorschrift in Abhängigkeit vom aktuellen Fahrzustand (5) auf die Betriebsbremse (BBA) und die mindestens eine Dauerbremse (DBA1, DBA2) aufteilt.

2. Bremsvorrichtung nach Anspruch 1, **dadurch gekennzeichnet,**
**dass**, wenn die Soll-Bremskraft (BK_Soll) kleiner als die maximal mögliche Dauerbremskraft (BK_DBA_{i, max}) ist, zur Kompensierung des vorgegebenen dynamischen Bremskraftverhaltens der mindestens einen Dauerbremse (DBA1, DBA2) beim Bremskraftaufbau bzw. Bremskraftabbau der mindestens einen Dauerbremse (DBA1, DBA2) zur Erreichung eines gewünschten Bremskraftverlaufes die Betriebsbremsanlage (BBA) überlagernd angesteuert wird.

3. Bremsvorrichtung nach einem der Ansprüche 1 oder 2, **dadurch gekennzeichnet,**
**dass** die mindestens eine Dauerbremse (DBA1, DBA2) eine Motorbremse, eine Auspuffklappenbremse bzw. eine Retarder-Bremse aufweist.

4. Bremsvorrichtung nach einem der Ansprüche 1 bis 3, **dadurch gekennzeichnet,**
**dass** Drehzahlsensoren zur Sensierung der Drehzahlen einzelner Räder, einer Antriebswelle bzw. des Motors vorgesehen sind und dass die Bremskraftaufteilung in Abhängigkeit von der momentanen Fahrzeuggeschwindigkeit, Raddrehzahl, Antriebswellendrehzahl bzw. Motordrehzahl erfolgt.

5. Bremsvorrichtung nach Anspruch 4, **dadurch gekennzeichnet,**
**dass** die Bremskraftaufteilung in Abhängigkeit von aktuell gemessenen bzw. ermittelten Radbeschleunigungen bzw. Rad/Achsschlüpfen erfolgt.

6. Bremsvorrichtung nach einem der Ansprüche 1 bis 5, **dadurch gekennzeichnet,**
**dass** bei Rädern von Achsen, die durch eine Dauerbremse (DBA1, DBA2) bremsbar sind, vorgesehen ist, dass ein höherer Radschlupf als zulässig angesehen wird, als an Achsen, die ausschließlich durch die Betriebsbremsanlage bremsbar sind.

7. Bremsvorrichtung nach einem der Ansprüche 1 bis 6, **dadurch gekennzeichnet,**
**dass** Sensoren zur Sensierung des aktuellen Kupplungsund/oder Getriebezustandes, insbesondere des aktuell eingelegten Ganges, vorgesehen sind und dass die Bremskraftaufteilung durch die Steuereinrichtung (4) in Abhängigkeit von dem aktuellen Kupplungs- und/oder Getriebezustand erfolgt.

8. Bremsvorrichtung nach einem der Ansprüche 1 bis 7, **dadurch gekennzeichnet,**
**dass** ein Temperatursensor zur Ermittlung der aktuellen Kühlsystemtemperatur vorgesehen ist und dass mindestens eine Dauerbremse (DBA1, DBA2) mit dem Kühlkreislauf des Kühlsystems des Fahrzeuges verbunden ist und die Betätigung dieser Dauerbremse (DBA1, DBA2) unter Berücksichtigung der aktuellen Kühlsystemtemperatur erfolgt.

9. Bremsvorrichtung nach einem der Ansprüche 1 bis 8, **dadurch gekennzeichnet,**
**dass** ein Sensor zur Überwachung des Ladezustandes der Batterie des elektrischen Fahrzeug-Energieversorgungssystems vorgesehen ist und dass mindestens eine Dauerbremse (DBA1, DBA2) vorgesehen ist, die ein Erzeuger oder Verbraucher elektrischer Energie ist und die Betätigung dieser Dauerbremse (DBA1, DBA2) unter Berücksichtigung des Ladezustandes erfolgt.

10. Bremsvorrichtung nach einem der Ansprüche 1 bis 9, **dadurch gekennzeichnet,**
**dass** die Betriebsbremsanlage (BBA) Bremsverschleißsensoren aufweist und dass die Bremskraftaufteilung in Abhängigkeit des aktuellen Verschleißzustandes der Bremsbeläge erfolgt, zur Erreichung eines gleichmäßigen Verschleißes.

11. Bremsvorrichtung nach einem der Ansprüche 1 bis 10, **dadurch gekennzeichnet,**
**dass** der Geber für die Betriebsbremsanlage (BBA) und die Dauerbremsanlage (DBA1, DBA2) ein gemeinsames Bremspedal ist.

12. Bremsvorrichtung nach einem der Ansprüche 1 bis 11, **dadurch gekennzeichnet,**
**dass** eine Einrichtung zur Bestimmung der Masse des Gesamtfahrzeuges vorgesehen ist, die mit der Steuereinrichtung verbunden ist, und
**dass** über den Geber (1) eine gewünschte Abbremsung vorgegeben wird und die Steuereinrichtung (4) in Abhängigkeit von der Masse des Gesamtfahrzeuges eine der gewünschten Abbremsung entsprechende Bremskraft erzeugt und
**dass** die Bremskraftaufteilung in Abhängigkeit von der Masse erfolgt.

13. Bremsvorrichtung nach einem der Ansprüche 1 bis 12, **dadurch gekennzeichnet,**
**dass** eine Einrichtung zur Bestimmung der aktuellen Fahrbahnneigung vorgesehen ist, die mit der Steuereinrichtung (4) verbunden ist, und
**dass** über den Geber (1) eine gewünschte Abbremsung vorgegeben wird und die Steuereinrichtung (4) in Abhängigkeit von der Fahrbahnneigung eine der gewünschten Abbremsung entsprechende Bremskraft erzeugt.

14. Bremsvorrichtung nach einem der Ansprüche 1 bis 13, **dadurch gekennzeichnet,**
**dass** mehrere verschiedene Dauerbremsen (DBA1, DBA2) vorgesehen sind, und
**dass** die Bremskraftaufteilung durch die Steuereinrichtung (4) auf die einzelnen Dauerbremsen (DBA1, DBA2) in Abhängigkeit von deren Stufbarkeit erfolgt.

15. Bremsvorrichtung nach einem der Ansprüche 1 bis 14, **dadurch gekennzeichnet,**
**dass** ein Bremsdruck für ein Anhängerfahrzeug in Abhängigkeit von der Gesamtdauerbremskraft und/oder der Gesamtbetriebsbremskraft des Zugfahrzeuges entsprechend einem vorgegebenen bzw. zulässigen Verhältnis geregelt wird.

16. Bremsvorrichtung nach einem der Ansprüche 1 bis 15, **dadurch gekennzeichnet,**
**dass** die Bremskraftaufteilung in Abhängigkeit der momentanen Motorschleppwirkung erfolgt.

17. Bremsvorrichtung nach Anspruch 3, **dadurch gekennzeichnet, dass** die Motorbremse und die Auspuffklappenbremse primär bei kleineren Geschwindigkeiten aktiviert werden als die Retarderbremse.
